# EUROPEAN PATENT APPLICATION

(11) **EP 4 663 583 A1**
(43) Date of publication of application: **17.12.2025**
(21) Application number: 25168411.4
(22) Date of filing: 04.04.2025
(51) Int. Cl.: B65G 37/00, B65G 47/90, H01M 4/04, H01M 10/04, H01M 10/44

(54) **BATTERY FORMATION DEVICE AND METHOD**

(30) Priority: 14.06.2024 CN 202410769510
(71) Applicant: Greensun Inc., Shenzhen (CN)
(72) Inventor: LU, Shuli, Shenzhen (CN); LUO, Chenghua, Shenzhen (CN); ZHANG, Jin, Shenzhen (CN); ZHENG, Junhui, Shenzhen (CN); WANG, Jia, Shenzhen (CN); ZHAO, Yuanqing, Shenzhen (CN)
(74) Representative: JD&P Patent Attorneys Joanna Dargiewicz & Partners

(57) **Abstract**

The invention discloses a battery formation device and method. The battery formation device comprises a formation three-dimensional storage and further comprises a battery placing manipulator, a battery taking manipulator, a button cup taking manipulator, a capsule conveying circulating drawstring, a first capsule transfer conveying line and a first capsule conveying drawstring. The battery placing manipulator, the battery taking manipulator and the button cup taking manipulator are all arranged on a formation frame, the battery placing manipulator, the battery taking manipulator and the button cup taking manipulator are all capable of moving forth and back relative to the formation frame, the battery placing manipulator and the battery taking manipulator are arranged side by side left and right, the button cup taking manipulator is located behind the battery placing manipulator and the battery taking manipulator, the capsule conveying circulating drawstring penetrates through the formation frame and is located below the button cup taking manipulator, and the formation three-dimensional storage is arranged behind the formation frame. The formation efficiency is improved, and the labor cost and the labor intensity are reduced.

## Description

### TECHNICAL FIELD

The present invention relates to the technical field of battery formation, in particular to a battery formation device and method.

### BACKGROUND OF THE PRESENT INVENTION

Generally, production of a battery has to go through an electrolyte injection process, a standing process and a formation process. At present, a formation device is generally used to carry out formation treatment on the battery, that is, to charge the battery, so that an electrode material in the battery reacts chemically with the electrolyte at a solid-electrode diphase interface, thus forming a passive film covering a surface of the electrode material, which is called "Solid Electrolyte Interface (SEI for short)".

The existing formation device generally comprises a formation three-dimensional storage. In practical application, a battery conveyed from a battery conveying line and subjected to standing treatment is manually put into a formation capsule first in general, so that the battery can be temporarily closed through the formation capsule, thus preventing an electrolyte in the battery from absorbing water during a battery transfer process from affecting a quality of the battery. Then, the formation capsule and the battery in the formation capsule are manually transported to the formation three-dimensional storage manually. Then, the formation capsule and the battery in the formation capsule are transported to the formation three-dimensional storage by a stacker to carry out formation treatment on the battery in the formation capsule through the formation three-dimensional storage, and then the battery after the formation treatment is manually taken out of the formation capsule and placed on the battery conveying line. The formation device with this structure adopts a manual mode to put the battery conveyed through the battery conveying line and subjected to standing treatment into the formation capsule, transport the formation capsule and the battery in the formation capsule to the formation three-dimensional storage, and then take the battery after the formation treatment out of the formation capsule and put the battery on the battery conveying line, so that a labor intensity is high, a formation efficiency is reduced, and a labor cost is increased.

### SUMMARY OF THE PRESENT INVENTION

To overcome the deficiencies of the prior art, the present invention provides a battery formation device and a method, which improve a formation efficiency, and reduces a labor cost and a manual labor intensity.

The technical solutions used in the present invention to solve the technical problems are as follows.

In a first aspect of the present invention, a battery formation device is provided, which comprises a formation three-dimensional storage, and further comprises a battery placing manipulator, a battery taking manipulator, a button cup taking manipulator, a capsule conveying circulating drawstring, a first capsule transfer conveying line and a first capsule conveying drawstring, wherein the battery placing manipulator, the battery taking manipulator and the button cup taking manipulator are all arranged on a formation frame, and the battery placing manipulator, the battery taking manipulator and the button cup taking manipulator are all capable of moving forth and back relative to the formation frame, the battery placing manipulator and the battery taking manipulator are arranged side by side left and right, the button cup taking manipulator is located behind the battery placing manipulator and the battery taking manipulator, the capsule conveying circulating drawstring penetrates through the formation frame and is located below the button cup taking manipulator, the formation three-dimensional storage is arranged behind the formation frame, the first capsule transfer conveying line is arranged on a left side of the capsule conveying circulating drawstring, and the first capsule conveying drawstring is arranged between the first capsule transfer conveying line and the formation three-dimensional storage.

In a second aspect of the present invention, a battery formation method is provided, which employs the battery formation device according to the above technical solutions, and comprises the following steps: S1: placing a formation capsule on a capsule conveying circulating drawstring, and making the formation capsule located at a lower part of a button cup taking manipulator, and then taking a buckle cup of the formation capsule off from a top end of a lower cavity of the formation capsule through the buckle cup taking manipulator; S2: placing a battery conveyed through a battery conveying line in an inner chamber of the lower cavity of the formation capsule through a battery placing manipulator, and then covering the buckle cup of the formation capsule on the top end of the lower cavity of the formation capsule through the button cup taking manipulator; S3: conveying the formation capsule and the battery in the formation capsule to a first capsule transfer conveying line through the capsule conveying circulating drawstring; S4: conveying the formation capsule and the battery in the formation capsule to a first capsule conveying drawstring through the first capsule transfer conveying line; S5: conveying the formation capsule and the battery in the formation capsule to a formation three-dimensional storage through the first capsule conveying drawstring; S6: transporting the formation capsule and the battery in the formation capsule on the first capsule conveying drawstring to the formation three-dimensional storage, and performing formation treatment on the battery in the formation capsule through the formation three-dimensional storage; S7: conveying the formation capsule and the battery in the formation capsule after the formation treatment to the lower part of the button cup taking manipulator through the capsule conveying circulating drawstring, and then taking the buckle cup of the formation capsule off the top end of the lower cavity of the formation capsule through the button cup taking manipulator; S8: taking the battery in the inner chamber of the lower cavity of the formation capsule out through the battery taking manipulator and placing the battery on the battery conveying line; and S9: repeating the steps S2-S8.

The present invention has the beneficial effects that: According to the present invention, the battery conveyed from the battery conveying line and subjected to standing treatment can be automatically put into the formation capsule and the battery after the formation treatment can be automatically taken out from the formation capsule and placed on the battery conveying line through the battery placing manipulator, the button cup taking manipulator and the battery taking manipulator provided; the formation capsule and the battery in the formation capsule can be conveyed to the formation three-dimensional storage through the capsule conveying circulating drawstring, the first capsule transfer conveying line and the first capsule conveying drawstring after the battery is put into the formation capsule, and the formation capsule after the formation treatment and the battery in the formation capsule can be conveyed to the lower part of the button cup taking manipulator through the capsule conveying circulating drawstring provided, so that the battery after the formation treatment can be conveniently taken out from the formation capsule and placed on the battery conveying line. Compared with the existing manual manner, the present invention has a high degree of automation, improves the formation efficiency, and reduces the labor cost and the labor intensity.

### DESCRIPTION OF THE DRAWINGS

The present invention is further described hereinafter with reference to the drawings and embodiments.
FIG. 1 is a plane diagram of a battery formation device provided by an embodiment of the present invention;
FIG. 2 is a schematic structural diagram of a formation frame, a battery placing manipulator, a battery taking manipulator and a button cup taking manipulator of the battery formation device as shown in FIG. 1;
FIG. 3 is a schematic structural diagram of the battery placing manipulator as shown in FIG. 2;
FIG. 4 is a schematic structural diagram of the battery taking manipulator as shown in FIG. 2;
FIG. 5 is a schematic structural diagram of a first angle of the button cup taking manipulator as shown in FIG. 2;
FIG. 6 is a schematic structural diagram of a second angle of the button cup taking manipulator as shown in FIG. 2;
FIG. 7 is a schematic structural diagram of a formation three-dimensional storage of the battery formation device as shown in FIG. 1;
FIG. 8 is a schematic structural diagram of a formation cavity, an auxiliary energizing mechanism, a formation charging mechanism and a positive-negative pressure circulating mechanism as shown in FIG. 7;
FIG. 9 is a schematic structural diagram of a formation bottom plate, a formation top plate, a lower auxiliary energizing assembly and a lower charging probe as shown in FIG. 8;
FIG. 10 is a left view of the formation bottom plate, the formation top plate, the lower auxiliary energizing assembly and the lower charging probe as shown in FIG. 8;
FIG. 11 is an exploded view of the formation bottom plate, the formation top plate, the lower auxiliary energizing assembly and the lower charging probe as shown in FIG. 8;
FIG. 12 is a schematic structural diagram of a positive-negative pressure circulating mechanism, an upper auxiliary energizing assembly and an upper charging probe as shown in FIG. 8;
FIG. 13 is a front view of the positive-negative pressure circulating mechanism, the upper auxiliary energizing assembly and the upper charging probe as shown in FIG. 12;
FIG. 14 is an exploded view of the positive-negative pressure circulating mechanism, the upper auxiliary energizing assembly and the upper charging probe as shown in FIG. 12;
FIG. 15 is a schematic structural diagram of a formation capsule;
FIG. 16 is an upward view of the formation capsule;
FIG. 17 is a sectional view of the formation capsule and a battery; and
FIG. 18 is a flow block diagram of a battery formation method provided on the basis of the battery formation device as shown in FIG. 1.

### DETAILED DESCRIPTION OF PREFERRED EMBODIMENTS

The concept, specific structure and generated technical effect of the present invention are clearly and completely described hereinafter with reference to the embodiments and the drawings to fully understand the objectives, features and effects of the present invention. Obviously, the described embodiments are only some but not all of the embodiments of the present invention, and based on the embodiments of the present invention, other embodiments obtained by those skilled in the art without going through any creative work all belong to the scope of protection of the present invention. In addition, all joint/connection relationships involved in the patent do not indicate direct connection between members only, but indicate that a better joint structure may be formed by adding or reducing a joint accessory according to specific implementation conditions. Various technical features in the present invention may be combined mutually on the premise of not conflicting with each other.

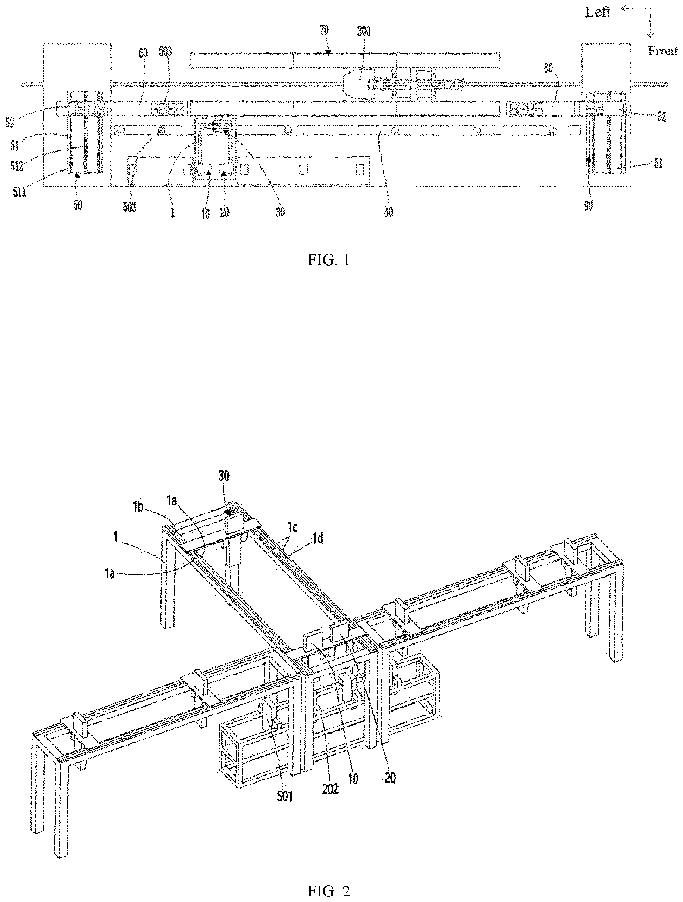

With reference to FIG. 1 and FIG. 2, a battery formation device provided by an embodiment of the present invention comprises a battery placing manipulator 10, a battery taking manipulator 20, a button cup taking manipulator 30, a capsule conveying circulating drawstring 40, a formation three-dimensional storage 70, a first capsule transfer conveying line 50, a second capsule transfer conveying line 90, a first capsule conveying drawstring 60 and a second capsule conveying drawstring 80. The battery placing manipulator 10, the battery taking manipulator 20 and the button cup taking manipulator 30 are all arranged on a formation frame 1, and the battery placing manipulator 10, the battery taking manipulator 20 and the button cup taking manipulator 30 are all capable of moving forth and back relative to the formation frame 1. The battery placing manipulator 10 and the battery taking manipulator 20 are arranged side by side left and right, and the button cup taking manipulator 30 is located behind the battery placing manipulator 10 and the battery taking manipulator 20. The capsule conveying circulating drawstring 40 penetrates through the formation frame 1 and is located below the button cup taking manipulator 30. The formation three-dimensional storage 70 is arranged behind the formation frame 1. The first capsule transfer conveying line 50 and the second capsule transfer conveying line 90 are respectively arranged on a left side and a right side of the capsule conveying circulating drawstring 40. The first capsule conveying drawstring 60 is located behind the capsule conveying circulating drawstring 40, and arranged between the first capsule transfer conveying line 50 and the formation three-dimensional storage 70. The second capsule conveying drawstring 80 is located behind the capsule conveying circulating drawstring 40 and arranged between the second capsule transfer conveying line 90 and the formation three-dimensional storage 70. In practical application, the formation frame 1 is internally provided with a battery conveying line 202, and the battery conveying line 202 is located in front of the capsule conveying circulating drawstring 40. The battery taking manipulator 20 and the battery placing manipulator 10 are located above the battery conveying line 202.

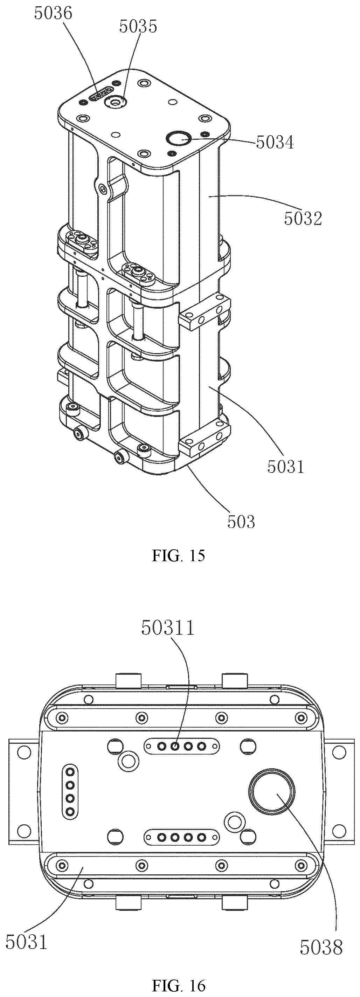

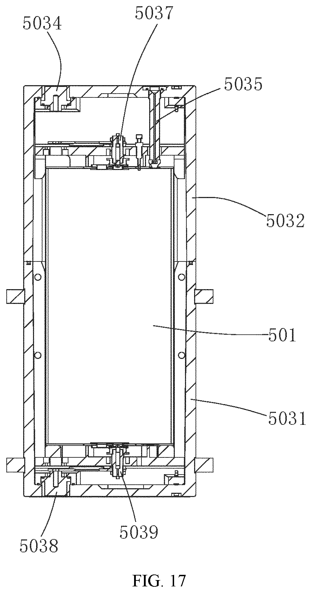

As shown in FIG. 15 to FIG. 17, the formation capsule 503 is an existing structure, and the formation capsule 503 comprises a lower cavity 5031 and a buckle cup 5032 covering a top end of the lower cavity 5031. The lower cavity 5031 is provided with an inner chamber and a mounting cavity located below the inner chamber. The top end of the lower cavity 5031 is provided with a lower cavity opening which is connected with the inner chamber. A bottom end of the lower cavity 5031 is provided with a negative terminal 5038 and three negative probe assemblies. The negative probe assemblies four negative probes 50311. A bottom part of the inner chamber is provided with a negative formation probe 5039, and the negative terminal 5038 is electrically connected with the negative formation probe 5039 through a lead. An inner wall of the inner chamber is provided with a heating plate, and the negative probe 50311 is electrically connected with a negative electrode of the heating plate. The buckle cup 5032 is provided with a first chamber and a second chamber located above the first chamber. A bottom end of the buckle cup 5032 is provided with a buckle cup opening which is connected with the first chamber. A top end of the buckle cup 5032 is provided with a positive terminal 5034, a positive probe assembly and a hollow gas-tight measuring rod 5035. A lower end of the gas-tight measuring rod 5035 extends into the first chamber, and the positive probe assembly is close to the gas-tight measuring rod 5035. The positive probe assembly comprises four positive probes 5036. The gas-tight measuring rod 5035 is arranged opposite to the positive terminal 5034. A top part of the first chamber is provided with a positive formation probe 5037, the positive terminal 5034 is electrically connected with the positive formation probe 5037 through a lead, and the positive probe 5036 is electrically connected with a positive electrode of the heating plate through a lead.

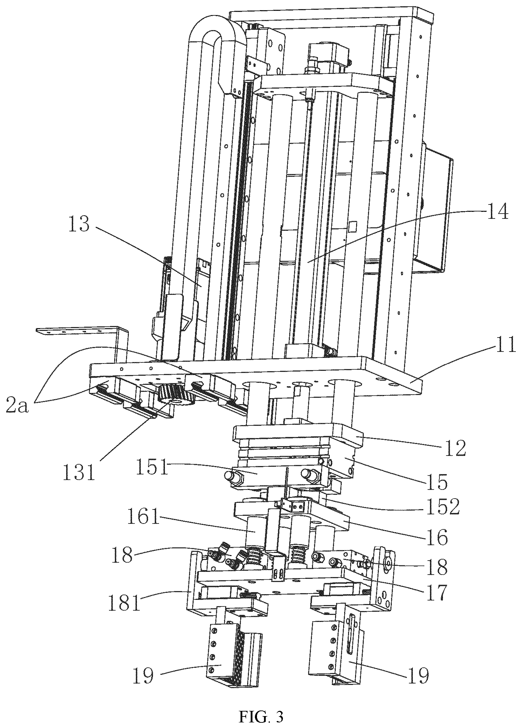

As shown in FIG. 2 and FIG. 3, the battery placing manipulator 10 is used for putting a battery 501 conveyed from the battery conveying line 202 and subjected to standing treatment into the inner chamber of the lower cavity 5031 of the formation capsule 503.The battery placing manipulator 10 comprises a first battery placing plate 11, a second battery placing plate 12, a battery placing motor 13, a lifting cylinder for battery placing 14, a rotating cylinder for battery placing 15 and a jaw assembly for battery placing. The first battery placing plate 11 is slidably arranged at a top end of the formation frame 1. Specifically, a left side of the top end of the formation frame 1 is provided with two first sliding rails 1a arranged left and right at intervals, a length direction of the first sliding rail 1a is the same as that of the formation frame 1, the first sliding rail 1a is slidably fitted with a first slider 2a, and the first slider 2a is arranged at a bottom end of the first battery placing plate 11. The second battery placing plate 12 is located below the first battery placing plate 11 and is located in the formation frame 1. The battery placing motor 13 is arranged at a top end of the first battery placing plate 11 and close to one end of the first battery placing plate 11, such as a left end. A tail end of an output shaft of the battery placing motor 13 penetrates through a first through hole of the first battery placing plate 11 and is sheathed with a battery placing gear 131. The left side of the top end of the formation frame 1 is provided with a first rack 1b, and a length direction of the first rack 1b is the same as that of the formation frame 1. The first rack 1b is located between two first sliding rails 1a and arranged in parallel with the first sliding rail1a in a left-right direction. The battery placing motor 13 is used for driving the battery placing gear 131 to rotate. Under an action of meshing between the battery placing gear 131 and the first rack 1b, the battery placing gear 131 can move forth and back along the first rack 1b, thereby driving the first battery placing plate 11 and the battery placing motor 13 to move forth and back relative to the formation frame 1. The lifting cylinder for battery placing 14 is arranged at the top end of the first battery placing plate 11, a tail end of an output shaft of the lifting cylinder for battery placing 14 penetrates through a second through hole of the first battery placing plate 11 and is connected with a top end of the second battery placing plate 12, and the lifting cylinder for battery placing 14 is used for driving the second battery placing plate 12 to move up and down. The rotating cylinder for battery placing 15 is arranged at a bottom end of the second battery placing plate 12, the jaw assembly for battery placing is located below the rotating cylinder for battery placing 15, and the jaw assembly for battery placing is connected with a tail end of an output shaft of the rotating cylinder for battery placing 15. The rotating cylinder for battery placing 15 is used for driving the jaw assembly for battery placing to rotate.

The Jaw assembly for battery placing comprises a third battery placing plate 16, a fourth battery placing plate 17, two jaw cylinders for battery placing 18 oppositely arranged left and right and two battery placing jaws 19 oppositely arranged left and right. The third battery placing plate 16 is located below the rotating cylinder for battery placing 15, and the third battery placing plate 16 is connected with the tail end of the output shaft of the rotating cylinder for battery placing 15 through a second battery placing block 152 and a first battery placing block 151 in turn. The fourth battery placing plate 17 is located below the third battery placing plate 16, the fourth battery placing plate 17 and the third battery placing plate 16 are connected through battery placing pillars 161, and a number of the battery placing pillars 161 may be set according to the actual situation. The two jaw cylinders for battery placing 18 are both arranged at a top end of the fourth battery placing plate 17 and located below the third battery placing plate 16. The two battery placing jaws 19 are both located below the fourth battery placing plate 17, tail ends of output shafts of the two jaw cylinders for battery placing 18 are respectively connected with top ends of the two battery placing jaws 19, and the two jaw cylinders for battery placing 18 are used for driving the two battery placing jaws 19 to approach or move away from each other to clamp or release the battery 501.

In this embodiment, the tail ends of the output shafts of the two jaw cylinders for battery placing 18 are respectively connected with the top ends of the two battery placing jaws 19 through two L-shaped battery placing connectors 181. The two jaw cylinders for battery placing 18 are used for driving the two battery placing connectors 181 to approach or move away from each other to drive the two battery placing jaws 19 to approach or move away from each other. Forward and backward movement of the first battery placing plate 11 can drive the lifting cylinder for battery placing 14, the second battery placing plate 12, the rotating cylinder for battery placing 15, the third battery placing plate 16, the battery placing pillar 161, the fourth battery placing plate 17, the two jaw cylinders for battery placing 18, the two battery placing connectors 181 and the two battery placing jaws 19 to move forward and backward. Up and down movement of the second battery placing plate 12 can drive the rotating cylinder for battery placing 15, the third battery placing plate 16, the battery placing pillar 161, the fourth battery placing plate 17, the two jaw cylinders for battery placing 18, the two battery placing connectors 181 and the two battery placing jaws 19 to move up and down. The rotating cylinder for battery placing 15 is used for driving the third battery placing plate 16 to rotate through the first battery placing block 151 and the second battery placing block 152, thus driving the battery placing pillar 161, the fourth battery placing plate 17, the two jaw cylinders for battery placing 18, the two battery placing connectors 181 and the two battery placing jaws 19 to rotate.

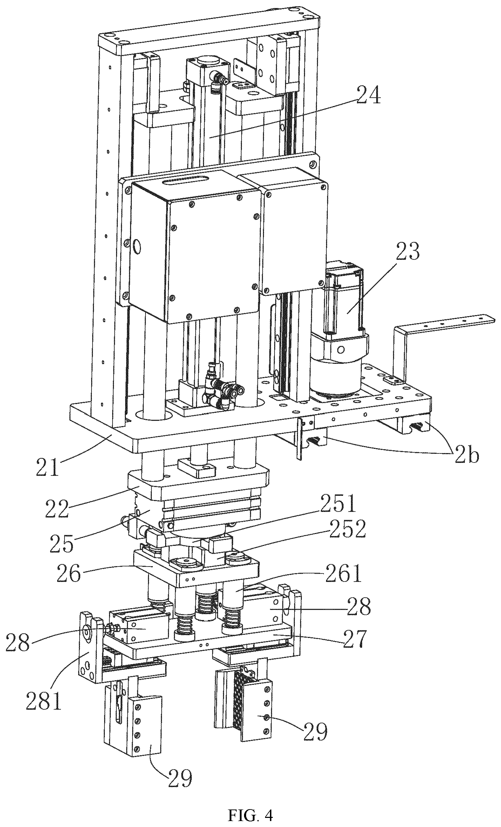

With reference to FIG. 2 and FIG. 4, the battery taking manipulator 20 is used for taking the battery 501 in the inner chamber of the lower cavity 5031 of the formation capsule 503 out and placing the battery on the battery conveying line 202. The battery taking manipulator 20 comprises a first battery taking plate 21, a second battery taking plate 22, a battery taking motor 23, a lifting cylinder for battery taking 24, a rotating cylinder for battery taking 25 and a jaw assembly for battery taking. The first battery taking plate 21 is slidably arranged at the top end of the formation frame 1. Specifically, a right side of the top end of the formation frame 1 is provided with two second sliding rails 1c arranged left and right at intervals, a length direction of the second sliding rail 1c is the same as that of the formation frame 1, the second sliding rails 1c is slidably fitted with a second slider 2b, and the second slider 2b is arranged at a bottom end of the first battery taking plate 21. The first battery placing plate 11 and the first battery taking plate 21 are arranged side by side left and right. The second battery taking plate 22 is located below the first battery taking plate 21 and located in the formation frame 1. The battery taking motor 23 is arranged at a top end of the first battery taking plate 21 and close to one end of the first battery taking plate 21, such as a right end. A tail end of an output shaft of the battery taking motor 23 penetrates through a first through hole of the first battery taking plate 21 and is sheathed with a battery taking gear. The right side of the top end of the formation frame 1 is provided with a second rack 1d, and a length direction of the second rack 1d is the same as that of the formation frame 1. The second rack 1d is located between two second sliding rail 1c and arranged in parallel with the second sliding rail 1c in a left-right direction. The battery taking gear is meshed with the second rack 1d. The battery taking motor 23 is used for driving the battery taking gear to rotate. Under an action of meshing between the battery taking gear and the second rack 1d, the battery taking gear can move forth and back along the second rack 1d, thereby driving the first battery taking plate 21 and the battery taking motor 23 to move forth and back relative to the formation frame 1. The lifting cylinder for battery taking 24 is arranged at the top end of the first battery taking plate 21, a tail end of an output shaft of the lifting cylinder for battery taking 24 penetrates through a second through hole of the first battery taking plate 21 and is connected with a top end of the second battery taking plate 22. The lifting cylinder for battery taking 24 is used for driving the second battery taking plate 22 to move up and down. The rotating cylinder for battery taking 25 is arranged at a bottom end of the second battery taking plate 22, and the jaw assembly for battery taking is located below the rotating cylinder for battery taking 25. The jaw assembly for battery taking is connected with a tail end of an output shaft of the rotating cylinder for battery taking 25. The rotating cylinder for battery taking 25 is used for driving the jaw assembly for battery taking to rotate.

The jaw assembly for battery taking comprises a third battery taking plate 26, a fourth battery taking plate 27, two jaw cylinders for battery taking 28 oppositely arranged left and right and two battery taking jaws 29 oppositely arranged left and right. The third battery taking plate 26 is located below the rotating cylinder for battery taking 25, and the third battery taking plate 26 is connected with the tail end of the output shaft of the rotating cylinder for battery taking through a second battery taking block 252 and a first battery taking block 251 in turn. The fourth battery taking plate 27 is located below the third battery taking plate 26, the fourth battery taking plate 27 and the third battery taking plate 26 are connected through battery taking pillars 261, and a number of the battery taking pillars 261 may be set according to the actual situation. The two jaw cylinders for battery taking 28 are both arranged at a top end of the fourth battery taking plate 27 and located below the third battery taking plate 26. The two battery taking jaws 19 are both located below the fourth battery taking plate 27, tail ends of output shafts of the jaw cylinders for battery taking 28 are respectively connected with top ends of the two battery taking jaws 29, and the two jaw cylinders for battery taking 28 are used for driving the two battery taking jaws 29 to approach or move away from each other to clamp or release the battery 501.

In this embodiment, the tail ends of the output shafts of the two jaw cylinders for battery taking 28 are respectively connected with the top ends of the two battery taking jaws 29 through two L-shaped battery taking connectors 281. The two jaw cylinders for battery taking 28 are used for driving the two battery taking connectors 281 to approach or move away from each other to drive the two battery taking jaws 29 to approach or move away from each other. Forward and backward movement of the first battery taking plate 21 can drive the lifting cylinder for battery taking 24, the second battery taking plate 22, the rotating cylinder for battery taking 25, the third battery taking plate 26, the battery taking pillar 261, the fourth battery taking plate 27, the two jaw cylinders for battery taking 28, the two battery taking connectors 281 and the two battery taking jaws 29 to move forward and backward. Up and down movement of the second battery taking plate 22 can drive the rotating cylinder for battery taking 25, the third battery taking plate 26, the battery taking pillar 261, the fourth battery taking plate 27, the two jaw cylinders for battery taking 28, the two battery taking connectors 281 and the two battery taking jaws 29 to move up and down. The rotating cylinder for battery taking 25 is used for driving the third battery taking plate 26 to rotate, thereby driving the battery taking pillar 261, the fourth battery taking plate 27, the two jaw cylinders for battery taking 28, the two battery taking connectors 281 and the two battery taking jaws 29 to rotate.

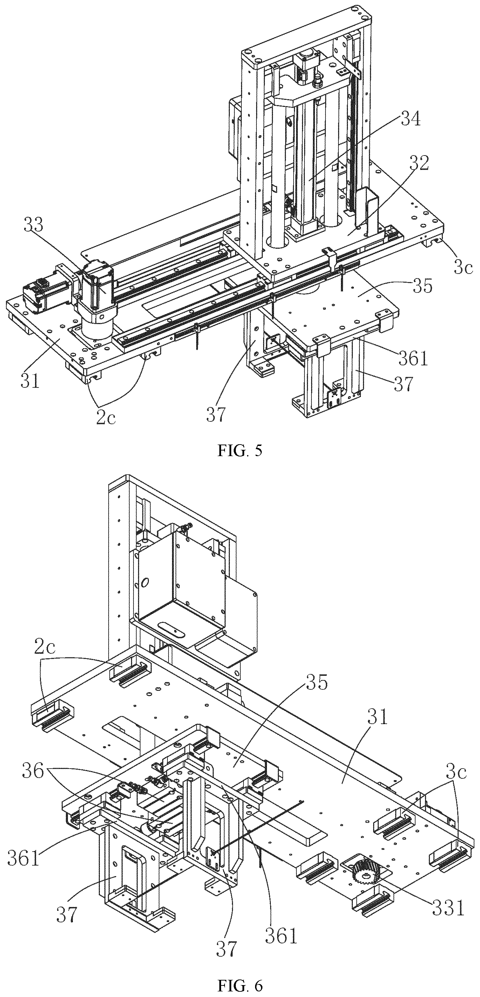

With reference to FIG. 2, FIG. 5 and FIG. 6, the button cup taking manipulator 30 is used for taking the buckle cup 5032 of the formation capsule 503 off from the top end of the lower cavity 5031 of the formation capsule 503 and covering the buckle cup 5032 of the formation capsule 503 on the top end of the lower cavity 5031 of the formation capsule 503. The button cup taking manipulator 30 comprises a first button cup taking plate 31, a second button cup taking plate 32, a button cup taking motor 33, a lifting cylinder for button cup taking 34 and a jaw assembly for button cup taking. The first button cup taking plate 31 is slidably arranged at the top end of the formation frame 1. Specifically, the first sliding rail 1b is slidably fitted with a third slider 2c, and the second sliding rail 1c is slidably fitted with a fourth slider 3c. The third slider 2c and the fourth slider 3c are respectively arranged at a bottom end of the first button cup taking plate 31. The second button cup taking plate 32 is arranged at a top end of the first button cup taking plate 31. The Button cup taking motor 33 is arranged at the top end of the first button cup taking plate 31 and close to one end of the first button cup taking plate 31, such as a left end. A tail end of an output shaft of the button cup taking motor 33 penetrates through a first through hole of the first button cup taking plate 31 and is sheathed with a button cup taking gear 331. The button cup taking gear 331 is meshed with the first rack 1b. The button cup taking motor 33 is used for driving the button cup taking gear 331 to rotate. Under an action of meshing between the button cup taking gear 331 and the first rack 1b, the button cup taking gear 331 can move forth and back along the first rack 1b, thereby driving the first button cup taking plate 31 and the button cup taking motor 33 to move forth and back along the formation frame 1. The lifting cylinder for button cup taking 34 is arranged at a top end of the second button cup taking plate 32. The jaw assembly for button cup taking is located below the first button cup taking plate 31 and located in the formation frame 1. A tail end of an output shaft of the lifting cylinder for button cup taking 34 penetrates through a through hole of the second button cup taking plate 32 and a second through hole of the first button cup taking plate 31, and is connected with the jaw assembly for button cup taking. The lifting cylinder for button cup taking 34 is used for driving the jaw assembly for button cup taking to move up and down.

The jaw assembly for button cup taking comprises a third button cup taking plate 35, two jaw cylinders for button cup taking 36 arranged side by side left and right, two connecting plates for button cup taking 361 arranged in front and back, and two button cup taking jaws 37 arranged in front and back. The third button cup taking plate 35 is located below the first button cup taking plate 31, and the tail end of the output shaft of the lifting cylinder for button cup taking 34 is connected with a top end of the third button cup taking plate 35. The two jaw cylinders for button cup taking 36 are respectively arranged at a bottom end of the third button cup taking plate 35. The two jaw cylinders for button cup taking 36 are located between the two connecting plates for button cup taking 361, and tail ends of output shafts of the two jaw cylinders for button cup taking 36 are respectively connected with the two connecting plates for button cup taking 361. The two button cup taking jaws 37 are respectively arranged at bottom ends of the two connecting plates for button cup taking 361. The two jaw cylinders for button cup taking 36 are used for driving the two connecting plates for button cup taking 361 to approach or move away from each other to clamp or release the buckle cup 5032 of the formation capsule 503. Forward and backward movement of the first button cup taking plate 31 can drive the second button cup taking plate 32, the lifting cylinder for button cup taking 34, the third button cup taking plate 35, the two jaw cylinders for button cup taking 36, the two connecting plates for button cup taking 361 and the two button cup taking jaws 37 to move forth and back. The lifting cylinder for button cup taking 34 is used for driving the third button cup taking plate 35 to move up and down, thereby driving the two jaw cylinders for button cup taking 36, the two connecting plates for button cup taking 361 and the two button cup taking jaws 37 to move up and down.

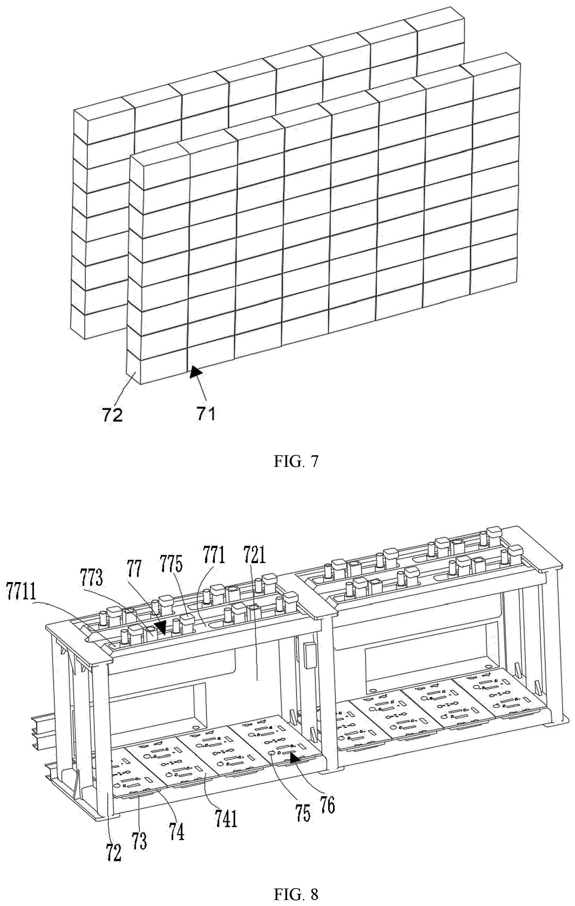

As shown in FIG. 7 and FIG. 8, the formation three-dimensional storage 70 is used for performing formation treatment on the battery 501 in the formation capsule 503. The formation three-dimensional storage 70 comprises a three-dimensional storage body. In this embodiment, there are a plurality of three-dimensional storage body, for example, two three-dimensional storage bodies, and the two three-dimensional storage bodies are oppositely arranged in front and back. A passage for a stacker 300 (see FIG. 1) to move is formed between the two three-dimensional storage bodies. It may be understood that a number of the three-dimensional storage body may be set according to the actual situation. The three-dimensional storage body comprises formation units 71. In this embodiment, there are a plurality of formation units 71 in each three-dimensional storage body, for example, four, and the four formation units 71 are connected in turn from left to right. It may be understood that a number of the formation unit 71 may be set according to the actual situation. The formation unit 71 comprises formation cavities 72. The formation cavity 72 is provided with an auxiliary energizing mechanism, a formation charging mechanism and a positive-negative pressure circulating mechanism. In this embodiment, there are a plurality of formation cavities 72 for each formation unit 71, for example, nine, and the nine formation cavities 72 are sequentially stacked from bottom to top. It may be understood that a number of the formation cavity 72 may be set according to the actual situation.

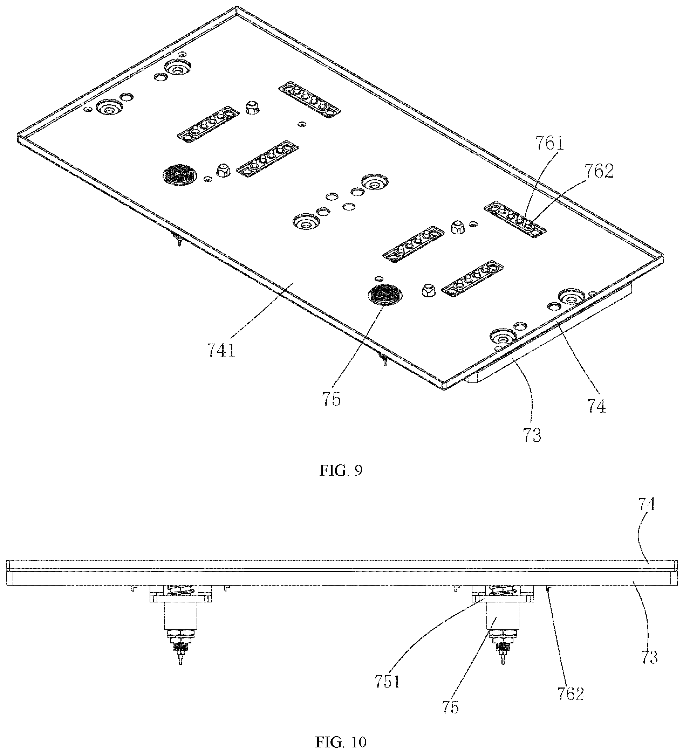

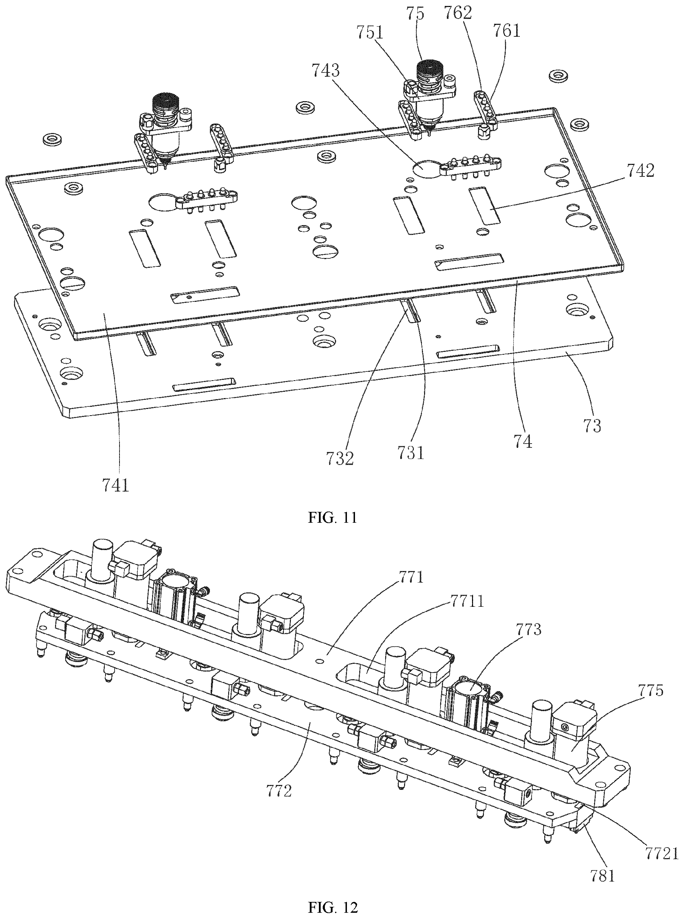

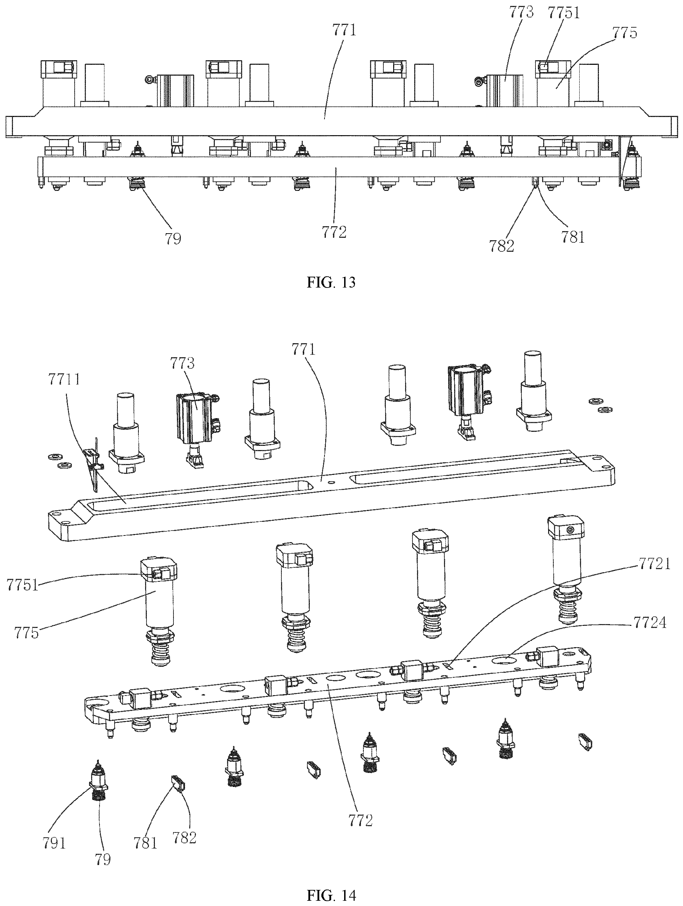

As shown in FIG. 8 to FIG. 14, the formation cavity 72 is provided with placing cavities 721. In this embodiment, the formation cavity 72 is provided with two placing cavities 721 which are separated from each other. It may be understood that a number of the placing cavity 721 may be set according to the actual situation. The placing cavity 721 is used for placing the formation capsule 503. A bottom part of the placing cavity 721 is provided with a formation bottom plate 73, a top end of the formation bottom plate 73 is provided with a formation top plate 74, and a top end of the formation top plate 74 is provided with a placing groove 741. Length directions of the formation bottom plate 73 and the formation top plate 74 are the same as a width direction of the formation cavity 72. A length direction of the placing groove 741 is the same as that of the formation top plate 74.

The auxiliary energizing mechanism comprises a lower auxiliary energizing assembly 76 and an upper auxiliary energizing assembly. The lower auxiliary energizing assembly 76 comprises a lower energizing probe holder 761 and a lower energizing probe 762 penetrating through the lower energizing probe holder 761. The upper auxiliary energizing assembly comprises an upper energizing probe holder 781 and an upper energizing probe 782 penetrating through the upper energizing probe holder 781. The formation charging mechanism comprises a lower charging probe 75 and an upper charging probe 79.

The lower energizing probe holder 761 is arranged on the formation bottom plate 73. Specifically, a top end of the formation bottom plate 73 is provided with a mounting groove 731, a bottom part of the mounting groove 731 is provided with a first formation through hole 732, and a bottom part of the placing groove 741 is provided with a second formation through hole 742 corresponding to the mounting groove 731. The lower energizing probe holder 761 is arranged in the mounting groove 731. An upper end of the lower energizing probe 762 passes through the second formation through hole 742 and is located in the placing groove 741. The upper end of the lower energizing probe 762 is used for butting with the negative probe 50311 of the negative probe assembly of the formation capsule 503 to realize electrical connection with the negative probe 50311. A lower end of the lower energizing probe 762 penetrates through the first formation through hole 732 and is located in a lower vacancy at a bottom part of the placing cavity 721, and a length direction of the lower vacancy is the same as that of the formation cavity 72. The lower end of the lower energizing probe 762 is used for being electrically connected with a negative electrode of a power supply through a connector wire. The top end of the formation bottom plate 73 is provided with a first formation mounting hole, the bottom part of the placing groove 741 is provided with a second formation mounting hole 743 corresponding to the first formation mounting hole, and the lower charging probe 75 penetrates through the first formation mounting hole and the second formation mounting hole 743. An upper end of the lower charging probe 75 is located in the placing groove 741, and a lower end of the lower charging probe 75 is located in the lower vacancy at the bottom part of the placing cavity 721. The upper end of the lower charging probe 75 is used for butting with the negative terminal 5038 of the formation capsule 503 to realize electrical connection with the negative terminal 5038. The lower end of the lower charging probe 75 is located in the lower vacancy and used for being electrically connected with a negative electrode of a charging power supply through a connector wire. A periphery of the lower charging probe 75 is sheathed with a lower charging probe holder 751, the lower charging probe holder 751 is arranged at a bottom end of the formation bottom plate 73, and the lower charging probe holder 751 plays a role in supporting the mounting of the lower charging probe 75.

There are three negative probe assemblies for the formation capsule 503, wherein two negative probe assemblies are oppositely arranged in a front-back direction, and the remaining one is oppositely arranged with the negative terminal 5038 in a left-right direction. The lower auxiliary energizing assembly 76 corresponds to the negative probe assembly, so there are also three lower auxiliary energizing assemblies, and the arrangement of the three lower auxiliary energizing assemblies is the same as that of the three negative probe assemblies. There are four negative probes 50311 for each negative probe assembly, so there are four lower energizing probes 762 for each lower auxiliary energizing assembly 76, and the four lower energizing probes 762 are arranged at intervals along a length direction of the lower energizing probe holder 761. In this embodiment, there are four formation bottom plates 73 and Formation top plates 74 at the bottom part of the placing cavity 721, and there are six lower auxiliary energizing assemblies 76 and two lower charging probes 75 on each formation bottom plate 73 and formation top plate 74, so the placing groove 741 of each formation top plate 74 can accommodate two formation capsules 503, so the placing cavity 721 can accommodate eight formation capsules 503. It may be understood that a number of the formation capsule 503 placed does not constitute a limitation of the present invention.

The positive-negative pressure circulating mechanism 77 comprises a first formation plate 771, a second formation plate 772, a formation lifting cylinder 773 and an electrolyte storage cup 775. A top end of the formation cavity 72 is provided with an upper vacancy connected with the placing cavity 721. A length direction of the upper vacancy is the same as that of the formation cavity 72. The first formation plate 771 is arranged in the upper vacancy. The second formation plate 772 is located below the first formation plate 771 and is located in the placing cavity 721. The formation lifting cylinder 773 is arranged at a top end of the first formation plate 771. In this embodiment, the top end of the first formation plate 771 is provided with a trench 7711, a length direction of the trench 7711 is the same as that of the first formation plate 771. The formation lifting cylinder 773 is arranged at a bottom part of the trench 7711, and the formation lifting cylinder 773 partially protrudes from the top end of the first formation plate 771. The bottom part of the trench 7711 is provided with a first through hole. A tail end of an output shaft of the formation lifting cylinder 773 penetrates through a first through hole of the first formation plate 771 and is connected with a top end of the second formation plate 772. The formation lifting cylinder 773 is used for driving the second formation plate 772 to move up and down.

In this embodiment, there are two positive-negative pressure circulating mechanisms 77 at the top part of the placing cavity 721, and each positive-negative pressure circulating mechanism 77 has two formation lifting cylinders 773 and two trenches 771. The two trenches 771 are arranged at intervals along a length direction of the first formation plate 771.

The electrolyte storage cup 775 penetrates through an electrolyte storage cup through hole of the second formation plate 772, a bottom end of the electrolyte storage cup 775 is located below the second formation plate 772, and the bottom part of the trench 7711 is provided with a second through hole. A top end of the electrolyte storage cup 775 penetrates through a second through hole of the first formation plate 771 and is located above the first formation plate 771. The top end of the electrolyte storage cup 775 is sealed and the top end thereof is opened. The top end of the electrolyte storage cup 775 is provided with an electrolyte storage cup joint 7751. The electrolyte storage cup joint 7751 is connected with an interior of the electrolyte storage cup 775, and the electrolyte storage cup joint 7751 is used for being connected with a vacuumizing device through a vacuum duct. The vacuumizing device, for example, is a vacuum pump for air pumping. Up and down movement of the second formation plate can drive the electrolyte storage cup 775 and the electrolyte storage cup joint 7751 to move up and down. In practical application, the electrolyte storage cup 775 corresponds to the gas-tight measuring rod 5035 of the formation capsule 503. The bottom end of the electrolyte storage cup 775 is used for being plugged into an upper end of the gas-tight measuring rod 5035. When the bottom end of the electrolyte storage cup 775 is plugged into the upper end of the gas-tight measuring rod 5035, the interior of the electrolyte storage cup 775 is connected with an interior of the gas-tight measuring rod 5035. In this embodiment, eight formation capsules 503 can be placed in the placing cavity 721, so there are four electrolyte storage cups 775 for each positive-negative pressure circulating mechanism 77.

A bottom end of the second formation plate 772 is provided with a first formation groove, a top end of the upper energizing probe holder 781 is arranged in the first formation groove, the top end of the second formation plate 772 is provided with a second formation groove 7721 connected with the first formation groove, and a lower end of the upper energizing probe holder 782 is located below the upper energizing probe holder 781. The lower end of the upper energizing probe holder 782 is used for butting with the positive probe 5036 of the positive probe assembly of the formation capsule 503 to realize electrical connection with the positive probe 5036. An upper end of the upper energizing probe 782 is located in the second formation groove 7721, and the upper end of the upper energizing probe 782 is used for being electrically connected with a positive electrode of the power supply through a connector wire. Up and down movement of the second formation plate 772 can drive the upper energizing probe 782 and the upper energizing probe holder 781 to move up and down. There are four positive probes 5036 for the positive probe assembly of the formation capsule 503, so there are four upper energizing probes 782 for the upper auxiliary energizing assembly. The four upper energizing probes 782 are arranged at intervals along a length direction of the upper energizing probe holder 781. In this embodiment, eight formation capsules 503 can be placed in the placing cavity 721, so there are four upper auxiliary energizing assemblies for each positive-negative pressure circulating mechanism 77.

The upper charging probe 79 penetrates through the second formation plate 772. A lower end of the upper charging probe 79 is located below the second formation plate 772 and is used for butting with the positive terminal 5034 of the formation capsule 503 to realize electrical connection with the positive terminal 5034. An upper end of the upper charging probe 79 is located between the second formation plate 772 and the first formation plate 771, and is used for being electrically connected with a positive electrode of the charging power supply through a connector wire. In this embodiment, eight formation capsules 503 can be placed in the placing cavity 721, so there are four upper charging probes 79 for each positive-negative pressure circulating mechanism 77. In this embodiment, the bottom end of the second formation plate 772 is provided with a third formation groove, and the top end of the second formation plate 772 is provided with a fourth formation groove 7724 connected with the third formation groove. The upper charging probe 79 is arranged penetrating through the third formation groove and the fourth formation groove 7724. A periphery of the upper charging probe 79 is sheathed with an upper charging probe holder 791, the upper charging probe holder 791 is arranged in the third formation groove, and the upper charging probe holder 791 plays a role in supporting the mounting of the upper charging probe 79. Up and down movement of the second formation plate 772 can drive the upper charging probe 79 and the upper charging probe holder 791 to move up and down.

The capsule conveying circulating drawstring 40 is used for placing the battery 501 in the inner chamber of the lower cavity 5031 of the formation capsule 503 and conveying the formation capsule 503 and the battery 501 in the formation capsule 503 to the first capsule transfer conveying line 50 after the buckle cup 5032 of the formation capsule 503 is covered on the top end of the lower cavity 5031 of the formation capsule 503, and is used for conveying the battery 501 in the formation capsule 503 to a lower side of the button cup taking manipulator 30 after formation treatment is performed on the battery 501 in the formation capsule 503 through the formation three-dimensional storage 70. The capsule conveying circulating drawstring 40 is an existing roller chain conveyor belt, and a structure of the capsule conveying circulating drawstring 40 will not be described here. The capsule conveying circulating drawstring 40 is arranged at a top end of a circulating frame. The capsule conveying circulating drawstring 40 extends along a left-right direction.

The First capsule transfer conveying line 50 is used for conveying the formation capsule 503 and the battery 501 in the formation capsule 503 to the first capsule conveying drawstring 60, and the first capsule conveying drawstring 60 is used for conveying the formation capsule 503 and the battery 501 in the formation capsule 503 to the formation three-dimensional storage 70. The second capsule conveying drawstring 80 is used for conveying the formation capsule 503 and the battery 501 in the formation capsule 503 to the second capsule transfer conveying line 90 after formation treatment is performed on the battery 501 in the formation capsule 503 through the formation three-dimensional storage 70, and the second capsule transfer conveying line 90 is used for conveying the formation capsule 503 after the formation treatment and the battery 501 in the formation capsule 503 to the capsule conveying circulating drawstring 40. Structures of the first capsule conveying drawstring 60 and the second capsule conveying drawstring 80 are the same as that of the capsule conveying circulating drawstring 40, and the structures of the first capsule conveying drawstring 60 and the second capsule conveying drawstring 80 will not be described here. The first capsule conveying drawstring 60 is arranged at a top end of a first conveying frame, and the second capsule conveying drawstring 80 is arranged at a top end of a second conveying frame. The first capsule transfer conveying line 50 is of an existing structure, and the first capsule transfer conveying line mainly comprises a conveying line body 51 extending in a front-back direction and a relay drawstring 52 extending in a left-right direction. The transfer drawstring 52 is arranged at a top end of the conveying line body 51. The transfer drawstring 52 and the conveying line body 51 are arranged in a cross way. The conveying line body 51 mainly comprises a drawstring frame, a drawstring rack 512 arranged at a top end of the drawstring frame 511 and a drawstring motor arranged at a bottom end of the transfer drawstring 52. A length direction of the drawstring rack 512 is the same as that of the drawstring frame 511. The transfer drawstring 52 is slidably arranged at a top end of the drawstring frame 511 through a conventional sliding rail-slider assembly, and a drawstring gear is sheathed at a tail end of an output shaft of the drawstring motor. The drawstring gear is meshed with the drawstring rack 512, and the drawstring motor is used for driving the drawstring gear to rotate. Under an action of meshing between the drawstring gear and the drawstring rack 512, the drawstring gear can move forth and back along the drawstring rack 512, thereby driving the drawstring motor and the transfer drawstring 52 to move forth and back relative to the drawstring frame 511. A structure of the transfer drawstring 52 is the same as that of the capsule conveying circulating drawstring 40. A structure of the second capsule transfer conveying line 90 is the same as that of the first capsule transfer conveying line 50, and the two are arranged in bilateral symmetry.

Through the above-mentioned structure, in practical application, the formation capsule 503 is first placed on the capsule conveying circulating drawstring 40 and located below the button cup taking manipulator 30, and then the button cup taking manipulator 30 acts: driving the two button cup taking jaws 37 to move downward to a predetermined position through the lifting cylinder for button cup taking 34, so that the two button cup taking jaws 37 are respectively located in front of and behind the buckle cup 5032 of the formation capsule 503 on the capsule conveying circulating drawstring 40. Then, the two jaw cylinders for button cup taking 36 drive the two button cup taking jaws 37 to approach to each other to grip the buckle cup 5032 of the formation capsule 503, and then the lifting cylinder for button cup taking 34 drives the two button cup taking jaws 37 and the buckle cup 5032 of the formation capsule 503 to move upward to the initial position. Then, the button cup taking motor 33 drives the button cup taking gear 331 to rotate, so that the two button cup taking jaws 37 and the buckle cup 5032 of the formation capsule 503 can be driven to move backward, so that the buckle cup 5032 of the formation capsule 503 is located behind the lower cavity 5031 of the formation capsule 503, and thus the buckle cup 5032 of the formation capsule 503 can be taken off from the top end of the lower cavity 5031 of the formation capsule 503.

After the battery 501 is conveyed to the lower part of the battery placing manipulator 10 through the battery conveying line 502, a length direction of the battery 501 is the same as that of the formation frame 1 in this case. As shown in FIG. 2, the battery placing manipulator 10 acts: driving the two battery placing jaws 19 to rotate through the rotating cylinder for battery placing 15, for example, rotate by 90 degrees along a clockwise direction. Then, the lifting cylinder for battery placing 14 drives the two battery placing jaws 19 to move downward to a predetermined position, so that the two battery placing jaws 19 are respectively located in front of and behind the battery 501. The two jaw cylinders for battery placing 18 respectively drive the two battery placing jaws 19 to approach to each other to grip the battery 501. Then, the lifting cylinder for battery placing 14 drives the two battery placing jaws 19 and the battery 501 to move upward to the initial position. Then the rotating cylinder for battery placing 15 drives the two battery placing jaws 19 and the battery 501 to rotate, for example, rotate by 90 degrees along a counterclockwise direction, so that the length direction of the battery 501 is the same as a width direction of the formation frame 1, as shown in FIG. 2. The battery placing motor 13 drives the battery placing gear 131 to rotate, thereby driving the two battery placing jaws 19 and the battery 501 to move backward, so that the battery 501 is located above the lower cavity 5031 of the formation capsule 503. The lifting cylinder for battery placing 14 drives the two battery placing jaws 19 and the battery 501 to move downward, so that the battery 501 is placed in the inner chamber of the lower cavity 5031 of the formation capsule 503. In this case, the battery 501 partially protrudes from the top end of the lower cavity 5031, and the negative electrode of the battery 501 is butted with the negative formation probe 5039 of the lower cavity 5031 of the formation capsule 503, so that the negative electrode of the battery 501 is electrically connected with the negative formation probe 5039. Then the two jaw cylinders for battery placing 18 respectively drive the two battery placing jaws 19 to move away from each other to release the battery 501. Then, the lifting cylinder for battery placing 14 drives the two battery placing jaws 19 to move upward to the initial position. The battery placing motor 13 drives the battery placing gear 131 to rotate, thereby driving the two battery placing jaws 19 to move forward to the initial position.

The button cup taking manipulator 30 acts: the button cup taking motor 33 drives the button cup taking gear 331 to rotate, thereby driving the two button cup taking jaws 37 and the buckle cup 5032 of the formation capsule 503 to move forward, so that the buckle cup 5032 of the formation capsule 503 is located above the lower cavity 5031 of the formation capsule 503. The lifting cylinder for button cup taking 34 drives the two button cup taking jaws 37 and the buckle cup 5032 of the formation capsule 503 to move downward, so that the buckle cup 5032 of the formation capsule 503 is covered on the top end of the lower cavity 5031 of the formation capsule 503, and the part of the battery 501 protruding the top end of the lower cavity 5031 is located in the first chamber of the buckle cup 5032. An electrolyte injection port of the battery 501 is matched with a lower end of the gas-tight measuring rod 5035 of the formation capsule 503. The positive electrode of the battery 501 is butted with the positive formation probe 5037 of the formation capsule 503, so that the positive electrode of the battery 501 is electrically connected with the positive formation probe 5037. The two jaw cylinders for button cup taking 36 drive the two button cup taking jaws 37 to move away from each other to clamp or release the buckle cup 5032 of the formation capsule 503. The lifting cylinder for button cup taking 34 drives the two button cup taking jaws 37 to move upward to the initial position, so as to cover the buckle cup 5032 of the formation capsule 503 on the top end of the lower cavity 5031 of the formation capsule 503.

The capsule conveying circulating drawstring 40 conveys the formation capsule 503 and the battery 501 in the formation capsule 503 towards a direction close to the first capsule transfer conveying line 50. Meanwhile, the drawstring motor of the first capsule transfer conveying line 50 drives the drawstring gear to rotate, thereby driving the transfer drawstring 52 of the first capsule transfer conveying line 50 to move towards a direction close to the capsule conveying circulating drawstring 40, so that one end of the transfer drawstring 52 is butted with one end of the capsule conveying circulating drawstring 40. In this way, the formation capsule 503 and the battery 501 in the formation capsule 503 can be conveyed to the transfer drawstring 52 of the first capsule transfer conveying line 50 through the capsule conveying circulating drawstring 40. The drawstring motor of the first capsule transfer conveying line 50 drives the drawstring gear to rotate, thereby driving the transfer drawstring 52 of the first capsule transfer conveying line 50 to move towards a direction close to the first capsule conveying drawstring 60, so that one end of the transfer drawstring 52 of the first capsule transfer conveying line 50 is butted with one end of the first capsule conveying drawstring 40. In this way, the formation capsule 503 and the battery 501 in the formation capsule 503 can be conveyed to the first capsule conveying drawstring 60 through the transfer drawstring 52 of the first capsule transfer conveying line 50. Then the formation capsule 503 and the battery 501 in the formation capsule 503 are conveyed to the formation three-dimensional storage 70 through the first capsule conveying drawstring 60.

The formation capsule 503 and the battery 501 in the formation capsule 503 on the first capsule conveying drawstring 60 are transported into the placing cavity 721 through the stacker 300 and placed on the bottom part of the placing groove 741, and the upper end of the lower energizing probe 762 is butted with the corresponding negative probe 50311 of the formation capsule 503, and the upper end of the lower charging probe 75 is butted with the negative terminal 5038 of the formation capsule 503, so that the upper end of the lower energizing probe 762 is electrically connected with the corresponding negative probe 50311, and the upper end of the lower charging probe 75 is electrically connected with the negative terminal 5038. The formation lifting cylinder 773 drives the second formation plate 772 to move downward, thereby driving the upper energizing probe 782, the upper charging probe 79 and the electrolyte storage cup 775 to move downward, until the lower end of the upper energizing probe holder 782 is butted with the corresponding positive probe 5036 of the formation capsule 503, the lower end of the upper charging probe 79 is butted with the terminal 5034 on the formation capsule 503, and the bottom end of the electrolyte storage cup 775 is plugged into the upper end of the gas-tight measuring rod 5035 of the formation capsule 503. In this way, the power supply can be electrically connected with the heating plate of the formation capsule 503 through the lower energizing probe 762 and the negative probe 50311 as well as the upper energizing probe 782 and the positive probe 5036, thus energizing the heating plate. The heating plate heats up after being energized so as to heat the battery 501 in the inner chamber of the lower cavity 5031 of the formation capsule 503. At the same time, the charging power supply can be electrically connected with the negative electrode of the battery 501 through the lower charging probe 75, the negative terminal 5038 and the negative formation probe 5039, and can be electrically connected with the positive electrode of the battery 501 through the upper charging probe 79, the positive terminal 5034 and the positive polarization probe 5037. In this way, the battery 501 can be charged by the charging power supply, so that an electrode material in the battery 501 reacts chemically with the electrolyte at a solid-electrode diphase interface, thereby forming a passive film covering a surface of the electrode material, thus realizing the formation of the battery 501 at a high temperature. In the process of charging the battery 501, an interior of the battery 501 is vacuumed by a vacuumizing device through the electrolyte storage cup joint 7751, the electrolyte storage cup 775, and the gas-tight measuring rod 5035 of the formation capsule 503, so that the interior of the battery 501 is in a negative pressure state. In this way, the gas generated by the formation of the battery 501 can be quickly discharged from the battery 501. A charging time of the battery 501 is, for example, 20 hours, a vacuum degree inside the battery 501 is 40 Kpa, and a temperature at which the heating plate heats the battery 501 is, for example, 45°C. In the process of vacuumizing the interior of the battery 501, the evacuated electrolyte in the battery 501 can be stored in the electrolyte storage cup 775. When the interior of the battery 501 returns to normal pressure, the electrolyte in the electrolyte storage cup 775 can flow back to the interior of the battery 501 through the gas-tight measuring rod 5035, so that a cell of the battery 501 can be wetted again.

After the formation, the formation capsule 503 after the formation treatment and the battery 501 in the formation capsule 503 in the placing cavity 721 are transported to the second capsule conveying drawstring 80 through the stacker 300. Meanwhile, the drawstring motor of the second capsule transfer conveying line 90 drives the drawstring gear to rotate, thereby driving the transfer drawstring 52 of the second capsule transfer conveying line 90 to move towards a direction close to the second capsule conveying drawstring 80, so that one end of the transfer drawstring 52 of the second capsule transfer conveying line 90 is butted with one end of the second capsule conveying drawstring 80. In this way, the formation capsule 503 after the formation treatment and the battery 501 in the formation capsule 503 can be conveyed to the transfer drawstring 52 of the second capsule transfer conveying line 90 through the second capsule conveying drawstring 80. The drawstring motor of the second capsule transfer conveying line 90 drives the drawstring gear to rotate, thereby driving the transfer drawstring 52 of the second capsule transfer conveying line 90 to move towards a direction close to the capsule conveying circulating drawstring 40, so that one end of the transfer drawstring 52 of the second capsule transfer conveying line 90 is butted with one end of the capsule conveying circulating drawstring 40. In this way, the formation capsule 503 after the formation treatment and the battery 501 in the formation capsule 503 can be conveyed to the capsule conveying circulating drawstring 40 through the transfer drawstring 52 of the second capsule transfer conveying line 90. The formation capsule 503 after the formation treatment and the battery 501 in the formation capsule 503 capsule are conveyed to the lower part of the button cup taking manipulator 30 through the capsule conveying circulating drawstring 40.

The button cup taking manipulator 30 takes buckle cup 5032 of the formation capsule 503 off from the top end of the lower cavity 5031 of the formation capsule 503 according to the foregoing steps, and meanwhile, the battery taking manipulator 20 acts: driving the battery taking gear to rotate through the battery taking motor 23, thereby driving the two battery taking jaws 29 to move backward, so that the two battery taking jaws 29 are located above the battery 501. The lifting cylinder for battery taking 24 drives the two battery taking jaws 29 to move downward to a predetermined position, so that the two battery taking jaws 29 are respectively located on a right side and a left side of the battery 501. The two jaw cylinders for battery taking 28 drive the battery taking jaws 29 to approach to each other to grip the battery 501. The lifting cylinder for battery taking 34 drives the battery taking jaws 29 and the battery 501 to move upward to the initial position. The battery taking motor 23 drives the battery taking gear to rotate, thereby driving the two battery taking jaws 29 and the battery 501 to move backward to the initial position. The rotating cylinder for battery taking 25 drives the two battery taking jaws 29 and the battery 501 to rotate, for example, by 90 degrees along a counterclockwise direction. The lifting cylinder for battery taking 24 drives the two battery taking jaws 29 and the battery 501 to move downward, until the battery 501 is placed on the battery conveying line 202. The two jaw cylinders for battery taking 28 drives the battery taking jaws 29 to move away from each other to release the battery 501. The lifting cylinder for battery taking 24 drives the two battery taking jaws 29 to move upward to the initial position. In this way, the battery 501 after the formation treatment can be taken out from the inner chamber of the lower cavity 5031 of the formation capsule 503 and placed on the battery conveying line 202.

The battery 501 is conveyed to next process through the battery conveying line 202, and meanwhile, next battery 50 conveyed by the battery conveying line 202 is put into the inner chamber of the lower cavity 5031 of the formation capsule 503 through the battery placing manipulator 10 according to the forgoing steps, and then the above steps are repeated.

According to the present invention, the battery 501 conveyed from the battery conveying line 202 and subjected to standing treatment can be automatically put into the formation capsule 503 and the battery 501 after the formation treatment can be automatically taken out from the formation capsule 503 and placed on the battery conveying line 202 through the battery placing manipulator 10, the button cup taking manipulator 30 and the battery taking manipulator 20 provided; the formation capsule 503 and the battery 501 in the formation capsule can be conveyed to the formation three-dimensional storage 70 through the capsule conveying circulating drawstring 40, the first capsule transfer conveying line 50 and the first capsule conveying drawstring 60 after the battery 501 is put into the formation capsule 503, and the formation capsule 503 after the formation treatment and the battery 501 in the formation capsule 503 can be conveyed to the lower part of the button cup taking manipulator 30 through the capsule conveying circulating drawstring 40 provided, so that the battery 501 after the formation treatment can be conveniently taken out from the formation capsule 503 and placed on the battery conveying line 202. Compared with the existing manual manner, the present invention has a high degree of automation, improves the formation efficiency, and reduces the labor cost and the labor intensity. The formation capsule 503 after the formation treatment and the battery 501 in the formation capsule 503 can be conveyed to the capsule conveying circulating drawstring 40 through the second capsule conveying drawstring 80 and the second capsule transfer conveying line 90 provided, thus further improving the formation efficiency and reducing the labor cost.

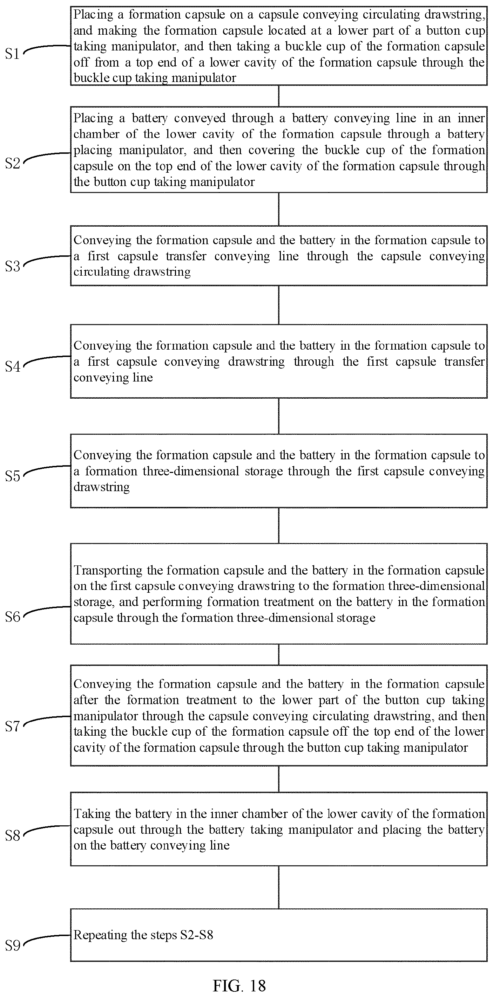

Referring to FIG. 18, the present invention further provides a battery formation method on the basis of the battery formation device above, which specifically comprises the following steps:
S1: placing a formation capsule 503 on a capsule conveying circulating drawstring 40, and making the formation capsule 503 located at a lower part of a button cup taking manipulator 30, and then taking a buckle cup 5032 of the formation capsule 503 off from a top end of a lower cavity 5031 of the formation capsule 503 through the buckle cup taking manipulator 30; S2: placing a battery 501 conveyed through a battery conveying line 202 in an inner chamber of the lower cavity 5031 of the formation capsule 503 through a battery placing manipulator 10, and then covering the buckle cup 5032 of the formation capsule 503 on the top end of the lower cavity 5031 of the formation capsule 503 through the button cup taking manipulator 30; S3: conveying the formation capsule 503 and the battery 501 in the formation capsule 503 to a first capsule transfer conveying line 50 through the capsule conveying circulating drawstring 40; S4: conveying the formation capsule 503 and the battery 501 in the formation capsule 503 to a first capsule conveying drawstring 60 through the first capsule transfer conveying line 50; S5: conveying the formation capsule 503 and the battery 501 in the formation capsule 503 to a formation three-dimensional storage 70 through the first capsule conveying drawstring 60; S6: transporting the formation capsule 503 and the battery 501 in the formation capsule 503 on the first capsule conveying drawstring 60 to the formation three-dimensional storage 70, and performing formation treatment on the battery 501 in the formation capsule 503 through the formation three-dimensional storage 70; S7: conveying the formation capsule 503 after the formation treatment and the battery 501 in the formation capsule 503 to the lower part of the button cup taking manipulator 30 through the capsule conveying circulating drawstring 40, and then taking the buckle cup 5032 of the formation capsule 503 off the top end of the lower cavity 5031 of the formation capsule 503 through the button cup taking manipulator 30; S8: taking the battery 501 in the inner chamber of the lower cavity 5031 of the formation capsule 503 out through the battery taking manipulator 20 and placing the battery 501 on the battery conveying line 202 so as to convey the battery 501 to next procedure through the battery conveying line 202; and S9: repeating the steps S2-S8.

After the step S6 and before the step S7, the method further comprises steps S61, S62 and S63 in turn. In the step S61, the formation capsule 503 after the formation treatment and the battery 501 in the formation capsule 503 are transported to a second capsule conveying drawstring 80 through a stacker 300. In the step S62, the formation capsule 503 after the formation treatment and the battery 501 in the formation capsule 503 are conveyed to a second capsule transfer conveying line 90 through second capsule conveying drawstring 80. In the step S63, the formation capsule 503 after the formation treatment and the battery 501 in the formation capsule 503 are conveyed to the capsule conveying circulating drawstring 40 through the second capsule transfer conveying line 90.

The above describe the preferred embodiments of the present invention in detail, but the present invention is not limited to the embodiments. Those skilled in the art may further make various equivalent modifications or substitutions without violating the spirit of the present invention, and these equivalent modifications or substitutions are all included in the scope defined by the claims of the present application.

## Claims

1. A battery formation device, **characterized in that**, comprising a formation three-dimensional storage, and further comprising a battery placing manipulator, a battery taking manipulator, a button cup taking manipulator, a capsule conveying circulating drawstring, a first capsule transfer conveying line and a first capsule conveying drawstring, wherein the battery placing manipulator, the battery taking manipulator and the button cup taking manipulator are all arranged on a formation frame, and the battery placing manipulator, the battery taking manipulator and the button cup taking manipulator are all capable of moving forth and back relative to the formation frame, the battery placing manipulator and the battery taking manipulator are arranged side by side left and right, the button cup taking manipulator is located behind the battery placing manipulator and the battery taking manipulator, the capsule conveying circulating drawstring penetrates through the formation frame and is located below the button cup taking manipulator, the formation three-dimensional storage is arranged behind the formation frame, the first capsule transfer conveying line is arranged on a left side of the capsule conveying circulating drawstring, and the first capsule conveying drawstring is arranged between the first capsule transfer conveying line and the formation three-dimensional storage.

2. The battery formation device according to claim 1, **characterized in that**, the battery placing manipulator comprises a first battery placing plate, a second battery placing plate, a battery placing motor, a lifting cylinder for battery placing, a rotating cylinder for battery placing, and a jaw assembly for battery placing, the first battery placing plate is slidably arranged at a top end of the formation frame, the second battery placing plate is located below the first battery placing plate and located in the formation frame, the battery placing motor is arranged at a top end of the first battery placing plate, a tail end of an output shaft of the battery placing motor penetrates through a first through hole of the first battery placing plate and is sheathed with a battery placing gear, the battery placing gear is meshed with a first rack at the top end of the formation frame, the lifting cylinder for battery placing is arranged at the top end of the first battery placing plate, a tail end of an output shaft of the lifting cylinder for battery placing penetrates through a second through hole of the first battery placing plate and is connected with a top end of the second battery placing plate, the rotating cylinder for battery placing is arranged at a bottom end of the second battery placing plate, the jaw assembly for battery placing is located below the rotating cylinder for battery placing, and the jaw assembly for battery placing is connected with a tail end of an output shaft of the rotating cylinder for battery placing.

3. The battery formation device according to claim 2, **characterized in that**, the battery taking manipulator comprises a first battery taking plate, a second battery taking plate, a battery taking motor, a lifting cylinder for battery taking, a rotating cylinder for battery taking and a jaw assembly for battery taking, the first battery taking plate is slidably arranged at the top end of the formation frame, the first battery placing plate and the first battery taking plate are arranged side by side left and right, the second battery taking plate is located below the first battery taking plate and located in the formation frame, the battery taking motor is arranged at a top end of the first battery taking plate, a tail end of an output shaft of the battery taking motor penetrates through a first through hole of the first battery taking plate and is sheathed with a battery taking gear, the battery taking gear is meshed with a second rack at the top end of the formation frame, the lifting cylinder for battery taking is arranged at the top end of the first battery taking plate, a tail end of an output shaft of the lifting cylinder for battery taking penetrates through a second through hole of the first battery taking plate and is connected with a top end of the second battery taking plate, the rotating cylinder for battery taking is arranged at a bottom end of the second battery taking plate, the jaw assembly for battery taking is located below the rotating cylinder for battery taking, and the jaw assembly for battery taking is connected with a tail end of an output shaft of the rotating cylinder for battery taking.

4. The battery formation device according to claim 2, **characterized in that**, the button cup taking manipulator comprises a first button cup taking plate, a second button cup taking plate, a button cup taking motor, a lifting cylinder for button cup taking and a jaw assembly for button cup taking, the first button cup taking plate is slidably arranged at the top end of the formation frame, the second button cup taking plate is arranged at a top end of the first button cup taking plate, the first button cup taking plate is slidably arranged at the top end of the formation frame, the second button cup taking plate is arranged at a top end of the first button cup taking plate, the button cup taking motor is arranged at the top end of the first button cup taking plate, a tail end of an output shaft of the button cup taking motor penetrates through a first through hole of the first button cup taking plate and is sheathed with a button cup taking gear, the button cup taking gear is meshed with the first rack, the lifting cylinder for button cup taking is arranged at a top end of the second button cup taking plate, the jaw assembly for button cup taking is located below the first button cup taking plate and is located in the formation frame, and a tail end of an output shaft of the lifting cylinder for button cup taking penetrates through a through hole of the second button cup taking plate and a second through hole of the first button cup taking plate, and is connected with the jaw assembly for button cup taking.

5. The battery formation device according to claim 1, **characterized in that**, the formation three-dimensional storage comprises a three-dimensional storage body, the three-dimensional storage body comprises a formation unit, the formation unit comprises a formation cavity, and the formation cavity is provided with an auxiliary energizing mechanism, a formation charging mechanism and a positive-negative pressure circulating mechanism.

6. The battery formation device according to claim 5, **characterized in that**, the formation cavity is provided with a placing cavity, a bottom part of the placing cavity is provided with a formation bottom plate, a top end of the formation bottom plate is provided with a formation top plate, and a top end of the formation top plate is provided with a placing groove.

7. The battery formation device according to claim 6, **characterized in that**, the positive-negative pressure circulating mechanism comprises a first formation plate, a second formation plate, a formation lifting cylinder and an electrolyte storage cup, a top end of the formation cavity is provided with an upper vacancy connected with the placing cavity, the first formation plate is arranged in the upper vacancy, the second formation plate is located below the first formation plate and is located in the placing cavity, the formation lifting cylinder is arranged at a top end of the first formation plate, a tail end of an output shaft of the formation lifting cylinder penetrates through a first through hole of the first formation plate and is connected with a top end of the second formation plate, the electrolyte storage cup penetrates through the second formation plate, a top end of the electrolyte storage cup penetrates through a second through hole of the first formation plate and is located above the first formation plate, the top end of the electrolyte storage cup is provided with an electrolyte storage cup joint, the electrolyte storage cup joint is connected with an interior of the electrolyte storage cup, the electrolyte storage cup joint is used for being connected with a vacuumizing device, a bottom end of the electrolyte storage cup is provided with an opening, and the bottom end of the electrolyte storage cup is located below the second formation plate.

8. The battery formation device according to claim 7, **characterized in that**, the auxiliary energizing mechanism comprises a lower auxiliary energizing assembly and an upper auxiliary energizing assembly, the lower auxiliary energizing assembly comprises a lower energizing probe holder and a lower energizing probe penetrating through the lower energizing probe holder, the lower energizing probe holder is arranged in a mounting groove at the top end of the formation bottom plate, a lower end of the lower energizing probe penetrates through a first formation through hole at a bottom part of the mounting groove and is located in a lower vacancy at the bottom part of the placing cavity, an upper end of the lower energizing probe passes through a second formation through hole at a bottom part of the placing groove and is located in the placing groove, the upper auxiliary energizing assembly comprises an upper energizing probe holder and an upper energizing probe penetrating through the upper energizing probe holder, a bottom end of the second formation plate is provided with a first formation groove, a top end of the upper energizing probe holder is arranged in the first formation groove, the top end of the second formation plate is provided with a second formation groove connected with the first formation groove, a lower end of the upper energizing probe holder is located below the upper energizing probe holder, and an upper end of the upper energizing probe is located in the second formation groove; and
the formation charging mechanism comprises a lower charging probe and an upper charging probe, the lower charging probe penetrates through the formation bottom plate and the formation top plate, a lower end of the lower charging probe is located in the lower vacancy, an upper end of the lower charging probe is located in the placing groove, the upper charging probe penetrates through the second formation plate, a lower end of the upper charging probe is located below the second formation plate, and an upper end of the upper charging probe is located between the first formation plate and the second formation plate.

9. The battery formation device according to claim 1, **characterized in that**, further comprising a second capsule transfer conveying line and a second capsule conveying drawstring, wherein the second capsule transfer conveying line is arranged on a right side of the capsule conveying circulating drawstring, and the second capsule conveying drawstring is arranged between the second capsule transfer conveying line and the formation three-dimensional storage.

10. A battery formation method employing the battery formation device according to any one of claims 1 to 9, **characterized in that**, comprising the following steps:
S1: placing a formation capsule on a capsule conveying circulating drawstring, and making the formation capsule located at a lower part of a button cup taking manipulator, and then taking a buckle cup of the formation capsule off from a top end of a lower cavity of the formation capsule through the buckle cup taking manipulator;
S2: placing a battery conveyed through a battery conveying line in an inner chamber of the lower cavity of the formation capsule through a battery placing manipulator, and then covering the buckle cup of the formation capsule on the top end of the lower cavity of the formation capsule through the button cup taking manipulator;
S3: conveying the formation capsule and the battery in the formation capsule to a first capsule transfer conveying line through the capsule conveying circulating drawstring;
S4: conveying the formation capsule and the battery in the formation capsule to a first capsule conveying drawstring through the first capsule transfer conveying line;
S5: conveying the formation capsule and the battery in the formation capsule to a formation three-dimensional storage through the first capsule conveying drawstring;
S6: transporting the formation capsule and the battery in the formation capsule on the first capsule conveying drawstring to the formation three-dimensional storage, and performing formation treatment on the battery in the formation capsule through the formation three-dimensional storage;
S7: conveying the formation capsule and the battery in the formation capsule after the formation treatment to the lower part of the button cup taking manipulator through the capsule conveying circulating drawstring, and then taking the buckle cup of the formation capsule off the top end of the lower cavity of the formation capsule through the button cup taking manipulator;
S8: taking the battery in the inner chamber of the lower cavity of the formation capsule out through the battery taking manipulator and placing the battery on the battery conveying line; and
S9: repeating the steps S2-S8.
